# EUROPÄISCHE PATENTSCHRIFT

(11) **EP 3 530 497 B1**
(45) Veröffentlichungstag und Bekanntmachung des Hinweises auf die Patenterteilung: **15.04.2020**
(21) Anmeldenummer: 18158916.9
(22) Anmeldetag: 27.02.2018
(51) Int. Cl.: B60G 7/00, B60G 7/02, B62D 17/00

(54) **FAHRWERKSBAUTEIL MIT EXZENTERSCHEIBENANSCHLAG SOWIE VERFAHREN ZUR HERSTELLUNG EINES FAHRWERKSBAUTEILS**
UNDERCARRIAGE COMPONENT WITH ECCENTRIC DISC STOP AND METHOD FOR PRODUCING AN UNDERCARRIAGE COMPONENT
COMPOSANT DE CHÂSSIS À BUTÉE DISQUE EXCENTRIQUE AINSI QUE PROCÉDÉ DE FABRICATION D'UN COMPOSANT DE CHÂSSIS

(43) Veröffentlichungstag der Anmeldung: 28.08.2019
(73) Patentinhaber: Autotech Engineering Deutschland GmbH, 33647 Bielefeld (DE)
(72) Erfinder: Krolo, Mario, 33803 Steinhagen (DE)
(74) Vertreter: Cohausz & Florack

(56) Entgegenhaltungen:
- EP-A1- 0 943 529
- EP-A2- 0 257 190
- EP-A2- 0 306 626
- EP-B1- 2 910 454
- DE-A1- 3 630 180
- DE-A1- 10 239 388
- US-A- 5 398 411

## Beschreibung

Die Erfindung betrifft ein Fahrwerksbauteil mit einer aus formbarem Grundmaterial, vorzugsweise Stahlblech, hergestellten Halterung, die mindestens ein Langloch zur Aufnahme eines Verbindungsbolzens und mindestens einen Anschlag für eine mit dem Verbindungsbolzen drehstarr verbundene oder drehstarr verbindbare Exzenterscheibe aufweist. Des Weiteren betrifft die Erfindung ein Verfahren zur Herstellung eines Fahrwerksbauteils.

Derartige Fahrwerksbauteile, wie z.B. Hinterachsträger, sind an den Halterungen zur Anbindung von Lenkerarmen, insbesondere z.B. Federlenkern und Spurstangen, mit Mitteln zur Spur- und Sturzeinstellung der Fahrzeugräder versehen. Diese Mittel umfassen üblicherweise eine Exzenterscheibe, die mit dem der Anbindung des Lenkerarms dienenden Verbindungsbolzen drehstarr verbunden ist, wobei der Exzenterscheibe ein Anschlag zugeordnet ist, an dem sie beim Verstellen des Verbindungsbolzens zur Spur- und Sturzeinstellung abrollt oder gleitet.

Im Stand der Technik ist der Anschlag für die Exzenterscheibe beispielsweise durch mindestens ein aufgeschweißtes Zusatzelement, beispielsweise ein U-förmiges Blechteil, oder durch geschlitzte Durchstellungen realisiert. EP 0 306 626 A2 zeigt ein Fahrwerksbauteil nach dem Oberbegriff des Anspruchs 1, worin gegen die Halterung ein flaches Blechteil mit einer Aussparung durch Schweißen, Nieten oder Hohlnieten befestigt ist. Diese bekannten Lösungen sind jedoch nicht zufriedenstellend. Denn bei den geschlitzten Durchstellungen besteht die Gefahr einer ungewollten Rissbildung bzw. Rissausbreitung im Grundmaterial des Fahrwerkbauteils. Ferner ist der Aufwand zur Einhaltung der maximal zulässigen Toleranzen bezüglich der Form und der Abmessungen der geschlitzten Durchstellungen relativ hoch. Zudem kann es bei der Montage der Verbindungsbolzen, nämlich beim Anziehen der Schraubverbindung zu einem Eindrücken der geschlitzten Durchstellungen kommen, so dass die Anschlagfunktion verloren geht.

Die Realisierung des Exzenteranschlages durch Aufschweißen eines Zusatzelements ist mit zusätzlichen Materialkosten und erheblichen Prozesskosten durch den zusätzlichen Fertigungsschritt für das Aufschweißen verbunden. Ferner besteht mitunter die Gefahr, dass sich das Zusatzelement löst, wenn die Schweißverbindung mangelhaft ausgeführt wurde und/oder durch Korrosion beansprucht wird.

Die DE 3 630 180 A1 und EP 0 943 529 A1 zeigen umgestellte Blechteile. Aus der EP 2 910 454 B2 ist ein aus Stahlblech gefertigter Fahrwerksbauteil mit Exzenteranschlag bekannt. In das Grundmaterial (Stahlblech) des Fahrwerksbauteils ist eine Vertiefung eingeformt, die einen umlaufenden Randbereich und einen von dem Randbereich eingefassten Boden definiert, wobei der Boden das Langloch aufweist und der Randbereich zwei längliche, parallel zueinander verlaufende Flächen aufweist, die als Anschlag für die Exzenterscheibe dienen. Der Exzenteranschlag dieses bekannten Fahrwerkslenkers lässt sich ohne die Gefahr der Rissbildung prozesssicher und kostengünstig herstellen.

Davon ausgehend lag der vorliegenden Erfindung die Aufgabe zugrunde, ein weiteres Fahrwerksbauteil der eingangs genannten Art zu schaffen, dessen Exzenteranschlag sich ohne die Gefahr einer Rissbildung prozesssicher und kostengünstig herstellen lässt.

Gelöst wird diese Aufgabe durch ein Fahrwerksbauteil mit den Merkmalen des Anspruchs 1. Bevorzugte und vorteilhafte Ausgestaltungen des erfindungsgemäßen Fahrwerksbauteils sind in den Unteransprüchen angegeben.

Das erfindungsgemäße Fahrwerksbauteil, das eine aus formbarem Grundmaterial, vorzugsweise Stahlblech, hergestellte Halterung umfasst, die mindestens ein Langloch zur Aufnahme eines Verbindungsbolzens und mindestens einen Anschlag für eine mit dem Verbindungsbolzen drehstarr verbundene oder drehstarr verbindbare Exzenterscheibe aufweist, ist gekennzeichnet durch eine aus dem Grundmaterial gebildete, gegenüber einem Körperabschnitt des Fahrwerksbauteils umgestellte Lasche, die eine das Langloch umgebende Aussparung aufweist, welche zwei längliche, parallel zueinander verlaufende Anschlagsflächen definiert, wobei die Anschlagsflächen als Anschlag für die Exzenterscheibe dienen.

Die Lasche lässt sich mit relativ geringem Aufwand in dem Grundmaterial des Fahrwerksbauteils vorsehen, so dass die Anschlagsflächen des Exzenteranschlags in produktionstechnisch günstiger Weise zur Verfügung gestellt werden können. Im Vergleich zu der herkömmlichen Lösung, bei der ein zusätzliches Bauelement als Anschlag aufgeschweißt wird, entfällt bei der erfindungsgemäßen Lösung der sonst übliche Schweißprozess. Hierdurch können Fertigungskosten gespart werden.

Im Vergleich zu den bekannten Lösungen, bei denen der Anschlag für die Exzenterscheibe durch geschlitzte Durchstellungen realisiert ist, wird bei der erfindungsgemäßen Lösung das Fahrwerksbauteil an der Anbindungsstelle nicht geschwächt. Durch die erfindungsgemäße Lösung wird das Problem der Rissbildung an den geschlitzten Durchstellungen vermieden.

Insbesondere ist es möglich, die Lasche in einer Stanzpresse herzustellen und in einem Umformwerkzeug umzustellen, die ohnehin zur Herstellung des Fahrwerksbauteils aus formbarem Grundmaterial, vorzugsweise Stahlblech, benötigt werden.

Die parallel zueinander verlaufenden Anschlagsflächen sind bevorzugt quer bzw. im Wesentlichen orthogonal zu der Längsachse des mindestens einen Langlochs ausgerichtet.

Aufgrund der länglichen und parallel zueinander verlaufenden Anschlagsflächen kann die Exzenterscheibe vorzugsweise eine kreiszylindrische Umfangskante aufweisen. Eine solche Exzenterscheibe lässt relativ einfach herstellen und ist daher kostengünstig erhältlich.

Eine bevorzugte Ausgestaltung der Erfindung ist dadurch gekennzeichnet, dass die Aussparung der Lasche länglich ausgestaltet ist. Hierdurch können die zwei länglichen, parallel zueinander verlaufenden Anschlagsflächen in günstiger Weise zur Verfügung gestellt werden.

Des Weiteren ist es bevorzugt, dass die Aussparung runde oder gerundete Ecken aufweist. Diese Ausgestaltung führt zu einer günstigen Spannungsverteilung in den Randbereichen der Lasche, so dass die von der Exzenterscheibe auf die Anschlagsflächen ausgeübte Kraft in zuverlässiger Weise von der Lasche bzw. dem Fahrwerksbauteil aufgenommen werden kann. Dabei sind die Anschlagsflächen durch bevorzugt parallel zueinander verlaufende Abschnitte eines bügelförmigen Stegs der Lasche miteinander verbunden. Die Übergänge zwischen den beiden parallel zueinander verlaufenden Abschnitten und einem Mittelteil des bügelförmigen Stegs sind vorzugsweise als bogenförmige Stegabschnitte ausgebildet. Es ist jedoch alternativ auch möglich, dass die beiden Anschlagsflächen durch bogenförmige Abschnitte eines bügelförmigen Stegs der Lasche miteinander verbunden sind. Durch diese beiden alternativen Ausgestaltungen kann jeweils in konstruktions- sowie fertigungstechnisch günstiger Weise ein Anschlag für die Exzenterscheibe zur Verfügung gestellt werden.

Eine weitere bevorzugte Ausgestaltung der Erfindung ist dadurch gekennzeichnet, dass die Lasche derart umgestellt ist, dass ihre Falzlinie quer, vorzugsweise im Wesentlichen orthogonal zu der Längsachse des mindestens einen Langlochs verläuft. Diese Ausgestaltung trägt ebenfalls zu einer günstigen Spannungsverteilung in der Lasche bei Aufnahme der von der Exzenterscheibe auf die Anschlagsflächen ausgeübten Kraft bei. Insbesondere führt diese Ausgestaltung zu einer besonders stabilen Abstützung der Exzenterscheibe bei einer Spur- und/oder Sturzeinstellung des betreffenden Fahrzeugrades.

Nach einer weiteren vorteilhaften Ausgestaltung der Erfindung ist das Grundmaterial mit Ausnahme der umgestellten Lasche als im Wesentlichen rinnenförmiger Körper mit zwei Schenkeln ausgebildet, wobei mindestens einer der Schenkel das eine Langloch aufweist. Bevorzugt weisen beide Schenkel jeweils ein Langloch zur Aufnahme des Verbindungsbolzens auf, wobei die Langlöcher miteinander fluchten. Durch die Ausbildung des Fahrwerkbauteils als rinnenförmiger Körper, welcher zwei Schenkel aufweist, können die Funktionalitäten eines Fahrwerksbauteils der hier in Rede stehenden Art, beispielsweise eines Federlenkers, insbesondere eines Federlenkers mit einer Stoßdämpferanbindung, bei relativ geringem Bauteilgewicht in konstruktiv günstiger Weise zur Verfügung gestellt werden.

Bevorzugt ist die Lasche am Stirnende des das Langloch aufweisenden Schenkels umgestellt. Hierdurch kann der durch die Lasche resultierende Materialverbrauch gering gehalten werden. Dabei ist die Lasche bevorzugt an derjenigen Stirnseite des Schenkels ausgebildet, welche einen relativ geringen bzw. den geringsten Abstand zu dem in dem Schenkel ausgebildeten Langloch aufweist. Hierdurch kann der durch die Lasche resultierende Materialverbrauch minimiert werden. Insbesondere wird in diesem Fall keine große räumliche Erstreckung der Lasche benötigt, um eine das Langloch umgebende Aussparung in der Lasche auszubilden.

Besonders bevorzugt weisen beide Schenkel des rinnenförmigen Körpers des Fahrwerksbauteils miteinander fluchtende Langlöcher zur Aufnahme des Verbindungsbolzens und umgestellte Laschen auf, wobei die jeweilige Lasche entsprechend einer der oben genannten Ausgestaltungen eine das zugeordnete Langloch umgebende Aussparung aufweist, welche zwei längliche, parallel zueinander verlaufende Anschlagsflächen definiert, wobei die Anschlagsflächen als Anschlag für die bzw. eine Exzenterscheibe dienen.

Eine weitere vorteilhafte Ausgestaltung der Erfindung ist dadurch gekennzeichnet, dass die umgestellte Lasche und der die Lasche aufweisende Schenkel einen Spalt begrenzen, dessen Spaltweite im Bereich von 0,1 bis 10 mm, vorzugsweise im Bereich von 0,5 bis 5 mm, besonders bevorzugt im Bereich von 0,5 bis 1 mm liegt. Durch den Spalt wird eine vollflächige und damit zuverlässig wirksame Korrosionsschutzbeschichtung der Lasche sowie des Schenkels im Bereich des Langlochs ermöglicht. Der Korrosionsschutz kann beispielsweise durch Tauchbeschichten oder Sprühbeschichten auf das Fahrwerksbauteil aufgebracht werden. Eine minimale Spaltweite zwischen der umgestellten Lasche und dem die Lasche aufweisenden Schenkel wird hinsichtlich einer Minimierung der axialen Erstreckung des Verbindungsbolzens bevorzugt. Somit können herkömmliche Verbindungsbolzen genutzt werden, die relativ kostengünstig erhältlich sind.

Hinsichtlich einer hohen Festigkeit der Lasche bei geringem Materialverbrauch ist es ferner vorteilhaft, wenn gemäß einer weiteren bevorzugten Ausgestaltung der Erfindung die Aussparung in der Lasche einen bügelförmigen Steg der Lasche begrenzt, wobei der Steg eine Breite aufweist, die mindestens das Doppelte, vorzugsweise mindestens das Dreifache der Dicke der Lasche beträgt. Der mittlere, längliche Abschnitt des bügelförmigen Stegs definiert dabei eine der Anschlagsflächen für die Exzenterscheibe. Bevorzugt beträgt eine kleinste Breite des Steges weniger als das 15-fache, vorzugsweise weniger als das 10-fache der Dicke der Lasche. Es wurde erkannt, dass eine Breite des Steges in dieser Größenordnung ausreichend ist, um die von der Exzenterscheibe auf den Steg ausgeübten Kräfte auszunehmen, ohne dass sich der Steg bzw. die Lasche verformt oder sich Risse bilden.

Nach einer weiteren vorteilhaften Ausgestaltung der Erfindung ist das rinnenförmige Fahrwerksbauteil, einschließlich der Lasche, einteilig (einschalig) aus einem einzelnen Blechzuschnitt hergestellt. Somit weisen der die Lasche aufweisende Schenkel und die Lasche im Wesentlichen die gleiche Dicke auf. Die Blechdicke liegt dabei bevorzugt in einem Bereich von 1 bis 4 mm, besonders bevorzugt in einem Bereich von 1,5 bis 3 mm.

Hinsichtlich der Umstelleigenschaften der Lasche bzw. der Spannungsverteilung in dem fertiggestellten Fahrwerksbauteils ist es vorteilhaft, wenn gemäß einer weiteren Ausgestaltung der Erfindung die Höhe der Lasche kleiner ist als die Höhe des die Lasche aufweisenden Schenkels. Bei der Höhe des Schenkels handelt es sich um den Abstand der Längskante des Schenkels zu der Rückenfläche (Grundfläche) des rinnenförmigen ausgebildeten Fahrwerksbauteils. Die Höhe der Lasche kann beispielsweise um 5 bis 30 % kleiner sein als die Höhe des Schenkels.

Die oben angegebene Aufgabe der vorliegenden Erfindung wird ebenfalls durch ein Verfahren zur Herstellung eines Fahrwerksbauteils mit den in Anspruch 11 angegebenen Merkmalen gelöst.

Das erfindungsgemäße Verfahren umfasst folgende Merkmale:
Metallblech, vorzugsweise Stahlblech, wird zu einer eine Lasche aufweisenden Platine zugeschnitten,
in das Metallblech werden vor, während oder nach dem Zuschnitt der Platine eine Aussparung zur Aufnahme einer Exzenterscheibe, die mit einem Verbindungsbolzen drehstarr verbunden oder drehstarr verbindbar ist, und neben der Aussparung ein Langloch zur Aufnahme des Verbindungsbolzens ausgeschnitten,
die Aussparung wird in der Lasche oder im Bereich der auszuschneidenden Lasche angeordnet und ist durch zwei längliche, parallel zueinander verlaufende Anschlagsflächen begrenzt,
die Platine wird in ein rinnenförmiges, zwei Schenkel aufweisendes Bauteil umgeformt, so dass an einem der Schenkel des Bauteils stirnseitig die Lasche angeordnet ist, und
nach dem Ausschneiden der Aussparung und dem Formen des rinnenförmigen Bauteils wird die Lasche, derart umgestellt, dass deren Aussparung das Langloch umgibt und die Exzenterscheibe in der Aussparung anordenbar ist, wobei die Anschlagsflächen als Anschlag für die mit dem Verbindungsbolzen drehstarr verbundene Exzenterscheibe dienen.

Die Vorteile eines solchen Verfahrens entsprechen den oben in Zusammenhang mit dem erfindungsgemäßen Fahrwerksbauteil erwähnten Vorteilen.

Eine bevorzugte Ausgestaltung des erfindungsgemäßen Verfahrens ist dadurch gekennzeichnet, dass die Lasche bezogen auf den Schenkel, an welchem die Lasche angeordnet ist, mit einem Umstellwinkel im Bereich von 175° bis 185°, vorzugsweise mit einem Umstellwinkel von im Wesentlichen 180°, umgestellt wird. Hierdurch kann in vorteilhafter Weise ein Spalt zwischen der Lasche und dem die Lasche aufweisenden Schenkel erzielt werden, dessen Spaltweite beispielsweise im Bereich von 0,1 bis 10 mm liegt. Insbesondere verläuft die Lasche nach dem Umstellen mit einem solchen Umstellwinkel im Wesentlichen parallel zu der Längsachse des den Verbindungsbolzen aufnehmenden Langlochs.

Nach einer weiteren vorteilhaften Ausgestaltung des Verfahrens wird das Langloch vor dem Umstellen der Lasche aus dem Metallblech ausgeschnitten. Somit kann das Langloch beispielsweise mit anderen in dem Fahrwerksbauteil vorgesehenen Aussparungen in einem Stanzschritt gleichzeitig ausgeschnitten werden. Bevorzugt werden das dem Verbindungsbolzen zugeordnete Langloch und die der Exzenterscheibe zugeordnete Aussparung zeitgleich aus dem Metallblech ausgeschnitten, so dass für das Herstellen der Aussparung kein zusätzlicher Fertigungsschritt durchgeführt werden muss und somit die Fertigungszeit reduziert wird.

Nach einer weiteren Ausgestaltung des Verfahrens werden das Langloch und/oder die Aussparung vor dem Formen des rinnenförmigen Bauteils aus dem Metallblech ausgeschnitten. Dies ist insbesondere in produktionstechnischer Hinsicht vorteilhaft, da das Herstellen des Langlochs bzw. der Aussparung nach dem Formen des rinnenförmigen Bauteils relativ schwierig ist.

Nachfolgend wird die Erfindung anhand einer Ausführungsbeispiele darstellenden Zeichnung näher erläutert. Es zeigen:
- Fig. 1: eine perspektivische Darstellung eines rinnenförmigen Fahrwerksbauteils;
- Fig. 2: einen Abschnitt des Fahrwerksbauteils entsprechend Fig. 1 mit einem mit einer Exzenterscheibe versehenen Verbindungsbolzen in einer perspektivischen Darstellung;
- Fig. 3a: einen Abschnitt des Fahrwerksbauteils entsprechend Fig. 1, jedoch in einem Zustand, in welchem die erfindungsgemäße Lasche des Fahrwerksbauteils nicht umgestellt ist, in einer Seitenansicht;
- Fig. 3b: den in Fig. 3a gezeigten Abschnitt des Fahrwerksbauteils mit umgestellter Lasche in Seitenansicht;
- Fig. 4: einen Abschnitt des Fahrwerksbauteils mit umgestellter Lasche entsprechend Fig. 1 in einer Draufsicht;
- Fig. 5: eine perspektivische Darstellung eines weiteren Ausführungsbeispiels eines rinnenförmigen Fahrwerksbauteils mit umgestellten Laschen als Exzenteranschlag;
- Fig. 6: einen Abschnitt des Fahrwerksbauteils aus Fig. 5, jedoch ohne Verbindungsbolzen und ohne Exzenterscheibe, in Seitenansicht; und
- Fig. 7: einen Abschnitt des Fahrwerksbauteils aus Fig. 5 in einer Draufsicht.

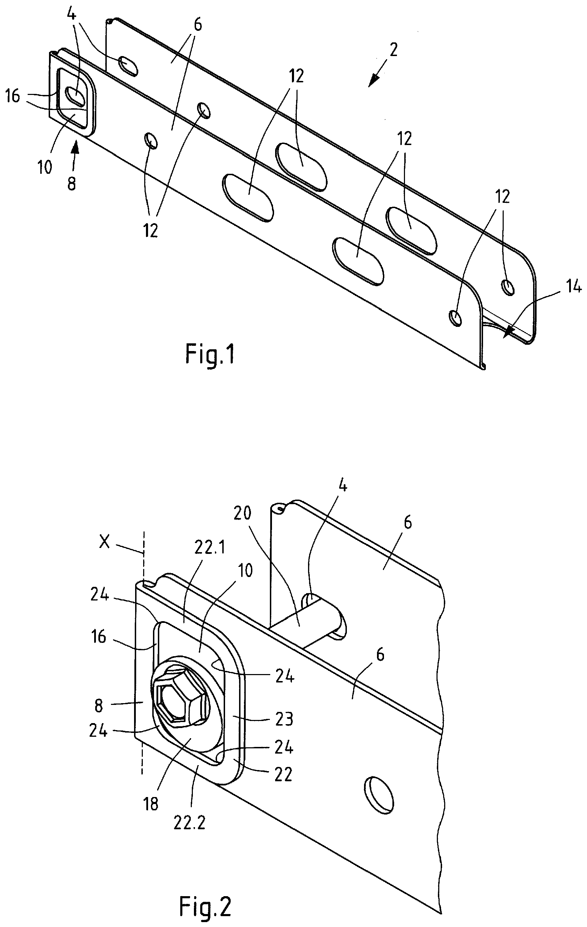

Fig. 1 zeigt schematisch ein Fahrwerksbauteil 2 für ein Kraftfahrzeug. Das gezeigte Fahrwerksbauteil 2 stellt symbolisch einen Lenker (Lenkerarm) dar. Das Fahrwerksbauteil 2 weist einen Exzenteranschlag auf, der es ermöglicht, die Spur und/oder den Sturz des Fahrwerks einzustellen.

Das Fahrwerksbauteil 2 ist aus Metallblech, vorzugsweise aus Stahlblech gefertigt, welches nach dem Zuschnitt einer Platine umgeformt wurde. Das Fahrwerksbauteil ist vorzugsweise aus hochfestem Stahl, insbesondere aus Mehrphasen- oder Complexphasenstahl gefertigt, der beispielsweise eine Zugfestigkeit von mindestens 800 MPa und eine Streckgrenze von mindestens 680 MPa aufweist. Die Blechdicke des Fahrwerksbauteils 2 liegt beispielsweise im Bereich von 1 bis 4 mm, vorzugsweise im Bereich von 1,5 bis 3 mm.

Das Fahrwerksbauteil 2 besitzt ein im Wesentlichen U-förmiges oder rinnenförmiges Querschnittsprofil. In die Schenkel 6 des rinnenförmigen Fahrwerksbauteils 2 sind zwei miteinander fluchtende Durchgangslöcher 4 eingebracht, die in Form von Langlöchern 4 ausgebildet sind. Durch die Langlöcher 4 des rinnenförmigen Fahrwerksbauteils 2 und eine zwischen den Schenkeln 6 angeordnete Lagerbuchse (nicht gezeigt) oder dergleichen ist ein Verbindungsbolzen 20 gesteckt (vgl. Fig. 2). Durch Verschieben des Verbindungsbolzens 20 entlang der Längsachse der Langlöcher 4 lässt sich über das Fahrwerksbauteil 2 bzw. den Lenkerarm der Sturz des zugeordneten Fahrzeugrades, d.h. die Neigung der Radebene zur Vertikalen, sowie die Spur der Fahrzeugräder einstellen.

An mindestens einem der Schenkel 6, vorzugsweise an beiden Schenkeln 6 des Fahrwerksbauteils 2 ist eine umgestellte Lasche 8 ausgebildet, wobei die Lasche 8 eine Aussparung 10 aufweist, welche das Langloch 4 des die Lasche 8 aufweisenden Schenkels 6 umgibt. Die Aussparung 10 der Lasche definiert dabei zwei längliche, parallel zueinander verlaufende Anschlagsflächen 16, die als Anschlag für eine Exzenterscheibe 18 dienen. Die Exzenterscheibe 18 wird in die Aussparung 10 eingesetzt und ist mit dem Verbindungsbolzen 20 drehstarr verbunden oder drehstarr verbindbar.

In den Schenkeln 6 des Fahrwerksbauteils 2 sind weitere Aussparungen 12 vorgesehen, die beispielsweise kreisrund, oval oder ebenfalls in Form eines Langlochs ausgebildet sind. Diese zusätzlichen Aussparungen 12 haben unterschiedliche Funktionen. Zumindest zwei der miteinander fluchtenden kreisrunden Aussparungen (Durchgangslöcher) 12 können ebenfalls als Anbindungsstelle für eine Lagerbuchse eines Gelenklagers dienen. Die relativ großen länglichen Aussparungen (Langlöcher) 12 reduzieren das Gewicht des Fahrwerksbauteils 2. Zudem sind Aussparungen 14 in der die Schenkel 6 verbindenden Grundfläche des Fahrwerksbauteils 2 ausgebildet. Die Aussparungen 14 sind zu den Stirnenden des Fahrwerksbauteils 2 hin offen und sind durch eine U-förmige Schnittkante begrenzt.

In Fig. 2 ist ein Abschnitt des die umgestellten Laschen aufweisenden Endes des Fahrwerksbauteils 2 gezeigt, wobei in den miteinander fluchtenden Langlöchern 4 der Schenkel 6 der mit Exzenterscheiben 18 versehene Verbindungsbolzen 20 aufgenommen ist. Die in den Aussparungen 10 der umgestellten Laschen 8 aufgenommenen Exzenterscheiben 18 sind drehstarr mit dem Verbindungsbolzen 20 verbunden. Beispielsweise weist der Verbindungsbolzen 20 hierzu eine Axialnut auf (nicht gezeigt), in welche die ringförmige Exzenterscheibe 18 mit einem an ihrer Durchgangsöffnung radial nach innen vorstehenden Vorsprung formschlüssig eingreift.

Die Aussparung 10 der Lasche 8 definiert einen bügelförmigen Steg 22. Dabei sind die parallel zueinander verlaufenden Anschlagsflächen 16 durch parallel zueinander verlaufende Abschnitte 22.1, 22.2 des bügelförmigen Stegs 22 miteinander verbunden. Die Ecken 24 der Aussparung 10 sind rund oder gerundet ausgebildet. Dementsprechend sind die Übergänge zwischen den beiden parallel zueinander verlaufenden Abschnitten 22.1, 22.2 und einem Mittelteil 23 des bügelförmigen Steges 22 vorzugsweise als bogenförmige Stegabschnitte ausgebildet. Die Breite B des Steges 22 beträgt vorzugsweise ca. das 3- bis 4-fache der Blechdicke D der Lasche 8. Ferner ist zu erkennen, dass die Falzlinie X der Lasche 8 im Wesentlichen orthogonal zu der Längsachse des von der Aussparung der Lasche 8 umgebenden Langlochs 4 verläuft.

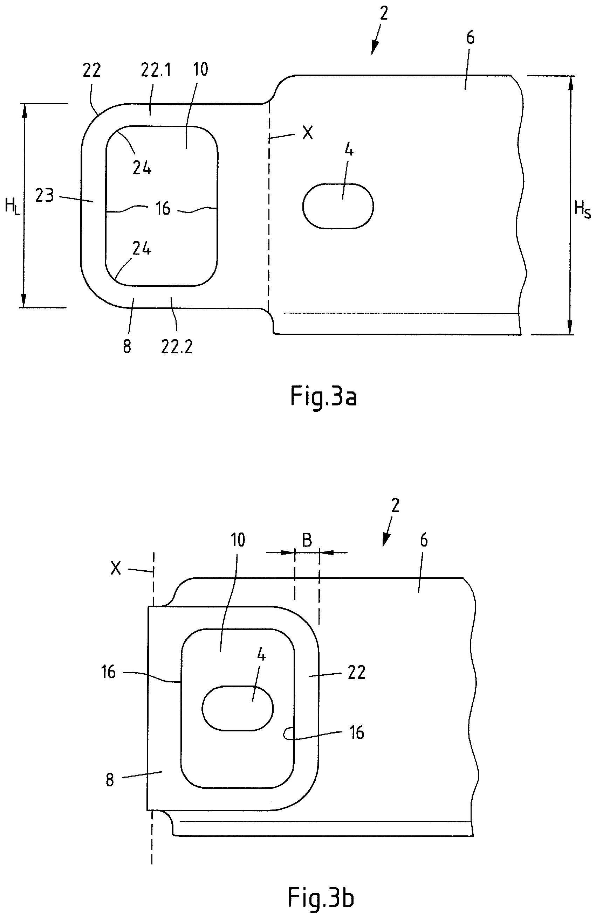

Fig. 3a zeigt einen Abschnitt des Fahrwerksbauteils 2 mit der die Aussparung 10 aufweisenden Lasche 8 in einem Zustand, in welchem die Lasche 8 noch nicht umgestellt ist. Es ist zu erkennen, dass die Höhe H_{L} der Lasche 8 deutlich kleiner ist als die Höhe H_{S} des die Lasche 8 aufweisenden Schenkels 6. Die Höhe H_{L} der Lasche 8 beträgt beispielsweise etwa das 0,8-fache der Höhe Hs des die Lasche 8 aufweisenden Schenkels 6. In Fig. 3b ist der in Fig. 3a gezeigte Abschnitt des Fahrwerksbauteils 2 in gleicher Ansicht mit umgestellter Lasche 8 gezeigt.

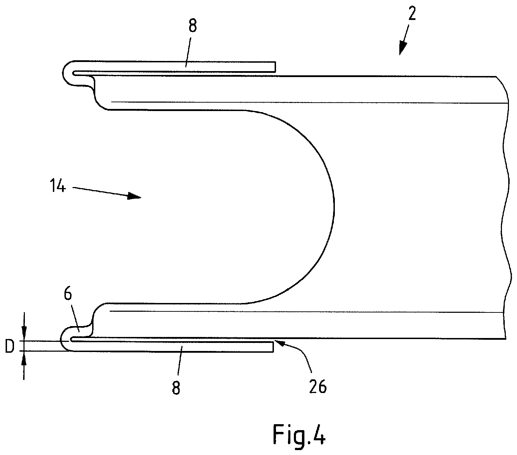

Fig. 4 zeigt den in Fig. 3b dargestellten Abschnitt des Lenkers 2 in einer Draufsicht. Der Schenkel 6 und die parallel dazu verlaufende Lasche 8 begrenzen einen Spalt 26. Der Spalt 26 hat eine Spaltweite, die beispielsweise im Bereich von 0,5 bis 1 mm liegt. Der Umstellwinkel der Lasche 8 beträgt vorzugsweise im Wesentlichen 180°.

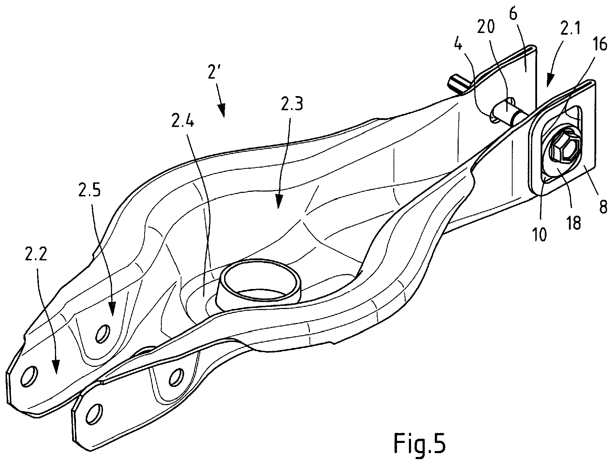

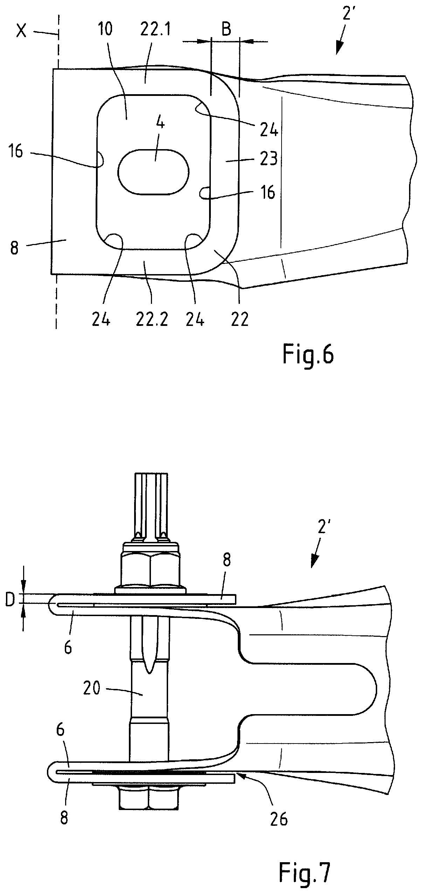

In den Figuren 5 bis 7 ist ein weiteres Ausführungsbeispiel eines Fahrwerksbauteils 2' gezeigt, das umgestellte Blechlaschen 8 als Exzenteranschlag aufweist. Bei dem gezeigten Fahrwerksbauteil 2' handelt es sich um einen einschaligen, rinnenförmigen Lenkerarm (Federlenker). Der Lenkerarm 2' ist aus Stahlblech gefertigt und hat einen ersten Endabschnitt 2.1, der zur Anbindung an einem Fahrwerksträger, beispielsweise einem Hinterachsträger ausgebildet ist, einen zweiten Endabschnitt 2.1, der zur radseitigen Anbindung ausgebildet ist, einen zwischen den beiden Endabschnitten 2.1, 2.2 ausgebildeten breitenerweiterten Abschnitt 2.3, der einen Federsitz 2.4 zur Abstützung einer Schraubenfeder (nicht gezeigt) definiert, und einen zwischen dem Federsitz 2.4 und dem zweiten Endabschnitt 2.2 ausgebildeten Verbindungsabschnitt 2.5 zur Anbindung eines Stoßdämpfers (nicht gezeigt).

Der Endabschnitt 2.1 des Lenkerarms 2' weist zu seiner Anbindung zwei miteinander fluchtende Langlöcher 4 auf, die in den Schenkeln 6 des rinnenförmigen Lenkerarmkörpers ausgebildet sind. Die Längsachsen der Langlöcher 4 verlaufen im Wesentlichen parallel zueinander und in Richtung der Längserstreckung des Lenkerarms 2'.

In die Langlöcher 4 ist ein Verbindungsbolzen 20 eingesteckt, der drehstarr mit zwei Exzenterscheiben 18 verbunden ist. Die als Exzenteranschlag dienenden Laschen 8 sind einstückig an dem einschaligen Lenkerarm 2' ausgebildet. Sie sind an beiden Schenkeln 6 am Stirnende ausgebildet und um ca. 180° umgestellt, so dass sie parallel zur Außenseite der Schenkel 6 verlaufen. Die Laschen 8 weisen Aussparungen 10 auf, in denen die Exzenterscheiben 18 aufgenommen werden. Die jeweilige Aussparung 10 definiert zwei längliche, parallel zueinander verlaufende Anschlagsflächen 16 als Anschlag für die Exzenterscheibe 18.

Die das Langloch 4 umgebende Aussparung 10 der jeweiligen Lasche 8 definiert dabei einen bügelförmigen Steg 22, wobei die beiden Anschlagsflächen 16 durch parallel zueinander verlaufende Stegabschnitte 22.1, 22.2 miteinander verbunden sind. Die Ecken 24 der Aussparung 10 sind rund ausgeführt. Dementsprechend sind die Übergänge zwischen den Abschnitten 22.1, 22.2 und dem Mittelteil 23 des bügelförmigen Steges 22 bogenförmig ausgebildet. Die Breite B des Steges 22 beträgt beispielsweise ca. das 3- bis 4-fache der Blechdicke D der Lasche 8. Die Falzlinie X der Lasche 8 verläuft im Wesentlichen orthogonal zu der Längsachse des Langlochs 4. Der Schenkel 6 und die parallel dazu verlaufende Lasche 8 begrenzen einen Spalt 26, dessen Spaltweite beispielsweise im Bereich von 0,5 bis 3 mm liegt.

Die Ausführung der Erfindung ist nicht auf die in der Zeichnung dargestellten Ausführungsbeispiele beschränkt. Vielmehr sind zahlreiche Varianten denkbar, die auch bei von den gezeigten Beispielen abweichender Ausgestaltung von der in den beigefügten Ansprüchen offenbarten Erfindung Gebrauch machen.

## Patentansprüche

1. Fahrwerksbauteil (2, 2') mit einer aus formbarem Grundmaterial, vorzugsweise Stahlblech, hergestellten Halterung, die mindestens ein Langloch (4) zur Aufnahme eines Verbindungsbolzens (20) und mindestens einen Anschlag für eine mit dem Verbindungsbolzen (20) drehstarr verbundene oder drehstarr verbindbare Exzenterscheibe (18) aufweist, **gekennzeichnet durch** eine aus dem Grundmaterial gebildete, gegenüber einem Körperabschnitt des Fahrwerksbauteils (2, 2') umgestellte Lasche (8), die eine das Langloch (4) umgebende Aussparung (10) aufweist, welche zwei längliche, parallel zueinander verlaufende Anschlagsflächen (16) definiert, wobei die Anschlagsflächen (16) als Anschlag für die Exzenterscheibe (18) dienen.

2. Fahrwerksbauteil nach Anspruch 1, **dadurch gekennzeichnet, dass** die Aussparung (10) länglich ausgestaltet ist.

3. Fahrwerksbauteil nach Anspruch 1 oder 2, **dadurch gekennzeichnet, dass** die Aussparung (10) runde oder gerundete Ecken (24) aufweist.

4. Fahrwerksbauteil nach einem der Ansprüche 1 bis 3, **dadurch gekennzeichnet, dass** die Lasche (8) derart umgestellt ist, dass ihre Falzlinie (X) quer, vorzugsweise im Wesentlichen orthogonal zu der Längsachse des mindestens einen Langlochs (4) verläuft.

5. Fahrwerksbauteil nach einem der Ansprüche 1 bis 4, **dadurch gekennzeichnet, dass** das Grundmaterial mit Ausnahme der umgestellten Lasche (8) als im Wesentlichen rinnenförmiger Körper mit zwei Schenkeln (6) ausgebildet ist, wobei mindestens einer der Schenkel (6) das mindestens eine Langloch (4) aufweist.

6. Fahrwerksbauteil nach Anspruch 5, **dadurch gekennzeichnet, dass** die Lasche (8) am Stirnende des das mindestens eine Langloch (4) aufweisenden Schenkels (6) umgestellt ist.

7. Fahrwerksbauteil nach Anspruch 5 oder 6, **dadurch gekennzeichnet, dass** die umgestellte Lasche (8) und der die Lasche (8) aufweisende Schenkel (6) einen Spalt (26) begrenzen, dessen Spaltweite im Bereich von 0,1 bis 10 mm, bevorzugt im Bereich von 0,5 bis 1 mm liegt.

8. Fahrwerksbauteil nach einem der Ansprüche 1 bis 7, **dadurch gekennzeichnet, dass** die Aussparung (10) in der Lasche (8) einen bügelförmigen Steg (22) der Lasche (8) begrenzt, wobei der Steg (22) eine Breite (B) aufweist, die mindestens das Doppelte, vorzugsweise mindestens das Dreifache der Dicke (D) der Lasche (8) beträgt.

9. Fahrwerksbauteil nach Anspruch 8, **dadurch gekennzeichnet, dass** eine kleinste Breite (B) des Steges (22) weniger als das 15-fache, vorzugsweise weniger als das 10-fache der Dicke (D) der Lasche (8) beträgt.

10. Fahrwerksbauteil nach Anspruch 5 oder Anspruch 5 in Kombination mit einem der Ansprüche 6 bis 9, **dadurch gekennzeichnet, dass** die Höhe (H_{L}) der Lasche (8) kleiner ist als die Höhe (H_{S}) des die Lasche (8) aufweisenden Schenkels (6).

11. Verfahren zur Herstellung eines Fahrwerksbauteils (2, 2'),
bei dem Metallblech, vorzugsweise Stahlblech, zu einer eine Lasche (8) aufweisenden Platine zugeschnitten wird,
bei dem in das Metallblech vor, während oder nach dem Zuschnitt der Platine eine Aussparung (10) zur Aufnahme einer Exzenterscheibe (18), die mit einem Verbindungsbolzen (20) drehstarr verbunden oder drehstarr verbindbar ist, und neben der Aussparung (10) ein Langloch (4) zur Aufnahme des Verbindungsbolzens (20) ausgeschnitten werden,
bei dem die Aussparung (10) in der Lasche (8) oder im Bereich der auszuschneidenden Lasche (8) angeordnet wird und durch zwei längliche, parallel zueinander verlaufende Anschlagsflächen (16) begrenzt ist,
bei dem die Platine in ein rinnenförmiges, zwei Schenkel (6) aufweisendes Bauteil umgeformt wird, so dass an einem der Schenkel (6) des Bauteils stirnseitig die Lasche (8) angeordnet ist, und
bei dem nach dem Ausschneiden der Aussparung (10) und dem Formen des rinnenförmigen Bauteils die Lasche, derart umgestellt wird, dass deren Aussparung (10) das Langloch (4) umgibt und die Exzenterscheibe (18) in der Aussparung (10) anordenbar ist, wobei die Anschlagsflächen (16) als Anschlag für die mit dem Verbindungsbolzen (20) drehstarr verbundene Exzenterscheibe (18) dienen.

12. Verfahren nach Anspruch 11,
bei dem die Lasche (8) bezogen auf den Schenkel (6), an welchem die Lasche (8) angeordnet ist, mit einem Umstellwinkel im Bereich von 175° bis 185°, vorzugsweise mit einem Umstellwinkel von im Wesentlichen 180°, umgestellt wird.

13. Verfahren nach Anspruch 11 oder 12,
bei dem das Langloch (4) vor dem Umstellen der Lasche (8) aus dem Metallblech ausgeschnitten wird.

14. Verfahren nach einem der Ansprüche 11 bis 13,
bei dem das Langloch (4) und die Aussparung (10) zeitgleich aus dem Metallblech ausgeschnitten werden.

15. Verfahren nach einem der Ansprüche 11 bis 14,
bei dem das Langloch (4) und/oder die Aussparung (10) vor dem Formen des rinnenförmigen Bauteils aus dem Metallblech ausgeschnitten werden.

## Claims

1. Chassis suspension component (2, 2') with a bracket which is made from a formable base material, preferably sheet steel, and comprises at least one slot (4) for receiving a connecting bolt (20) and at least one stop for an eccentric disc (18) which is or can be connected rotationally fixedly to the connecting bolt (20), **characterised by** a tab (8) formed from the base material and folded relative to a body portion of the chassis suspension component (2, 2') and having a recess (10) surrounding the slot (4), which recess defines two elongate stop faces (16) running parallel to each other, wherein the stop faces (16) serve as a stop for the eccentric disc (18).

2. Chassis suspension component according to claim 1, **characterised in that** the recess (10) is configured so as to be elongate.

3. Chassis suspension component according to claim 1 or 2, **characterised in that** the recess (10) has round or rounded corners (24).

4. Chassis suspension component according to any of claims 1 to 3, **characterised in that** the tab (8) is folded such that its fold line (X) runs transversely, preferably substantially orthogonally, to the longitudinal axis of the at least one slot (4).

5. Chassis suspension component according to any of claims 1 to 4, **characterised in that** the base material with the exception of the folded tab (8) is formed as a substantially channel-like body with two legs (6), wherein at least one of the legs (6) comprises the at least one slot (4).

6. Chassis suspension component according to claim 5, **characterised in that** the tab (8) is folded at the end face of the leg (6) comprising the at least one slot (4).

7. Chassis suspension component according to claim 5 or 6, **characterised in that** the folded tab (8) and the leg (6) comprising the tab (8) delimit a gap (26), the gap width of which lies in the range from 0.1 to 10 mm, preferably in the range from 0.5 to 1 mm.

8. Chassis suspension component according to any of claims 1 to 7, **characterised in that** the recess (10) in the tab (8) delimits a yoke-shaped web (22) of the tab (8), wherein the web (22) has a width (B) which amounts to at least twice, preferably at least three times the thickness (D) of the tab (8).

9. Chassis suspension component according to claim 8, **characterised in that** a minimal width (B) of the web (22) amounts to less than 15 times, preferably less than 10 times the thickness (D) of the tab (8).

10. Chassis suspension component according to claim 5, or claim 5 in combination with any of claims 6 to 9, **characterised in that** the height (H_{L}) of the tab (8) is smaller than the height (Hs) of the leg (6) comprising the tab (8).

11. Method for producing a chassis suspension component (2, 2'),
wherein a metal sheet, preferably sheet steel, is cut into a blank comprising a tab (8),
wherein before, during or after the cutting of the blank, a recess (10) is cut in the metal sheet to receive an eccentric disc (18) which is or can be connected rotationally fixedly to a connecting bolt (20), and adjacent to the recess (10) a slot (4) is cut out to receive the connecting bolt (20),
wherein the recess (10) is arranged in the tab (8) or in the region of the tab (8) to be cut out, and is delimited by two elongate stop faces (16) running parallel to each other,
wherein the blank is formed into a channel-like component having two legs (6), so that the tab (8) is arranged on the end face of one of the legs (6) of the component, and
wherein after cutting out the recess (10) and forming the channel-like component, the tab is folded such that its recess (10) surrounds the slot (4) and the eccentric disc (18) can be arranged in the recess (10), wherein the stop faces (16) serve as a stop for the eccentric disc (18) which is connected rotationally fixedly to the connecting bolt (20).

12. Method according to claim 11, wherein the tab (8) is folded at a fold angle in the range from 175° to 185°, preferably with a fold angle of substantially 180°, relative to the leg (6) on which the tab (8) is arranged.

13. Method according to claim 11 or 12, wherein the slot (4) is cut out of the metal sheet before the tab (8) is folded.

14. Method according to any of claims 11 to 13, wherein the slot (4) and the recess (10) are cut out of the metal sheet at the same time.

15. Method according to any of claims 11 to 14, wherein the slot (4) and/or the recess (10) are cut out of the metal sheet before the channel-like component is formed.

## Revendications

1. Composant de châssis (2, 2') comprenant un support fabriqué à partir d'un matériau de base - de préférence une tôle d'acier - apte à être moulé, lequel support présente au moins un trou oblong (4) destiné à recevoir un boulon d'assemblage (20) et présente au moins une butée pour un disque de l'excentrique (18) assemblé en étant solidaire en rotation ou bien pouvant être assemblé en étant solidaire en rotation avec le boulon
d'assemblage (20),
**caractérisé par** une languette (8) formée à partir du matériau de base et retournée par rapport à une partie du corps du composant de châssis (2, 2'), laquelle languette présente un évidement (10) entourant le trou oblong (4), lequel évidement définit deux surfaces de butée allongées (16) s'étendant parallèlement l'une à l'autre, où les surfaces de butée (16) servent de butée pour le disque de l'excentrique (18).

2. Composant de châssis selon la revendication 1,
**caractérisé en ce que** l'évidement (10) est configuré en étant de forme allongée.

3. Composant de châssis selon la revendication 1 ou 2,
**caractérisé en ce que** l'évidement (10) présente des parties angulaires (24) rondes ou arrondies.

4. Composant de châssis selon l'une quelconque des revendications 1 à 3, **caractérisé en ce que** la languette (8) est retournée de manière telle, que sa ligne de pliage (X) s'étende de façon transversale, de préférence pratiquement de façon orthogonale par rapport à l'axe longitudinal du trou oblong (4) au moins au nombre de un.

5. Composant de châssis selon l'une quelconque des revendications 1 à 4, **caractérisé en ce que** le matériau de base, à l'exception de la languette retournée (8), est configuré pratiquement comme un corps - en forme de goulotte - ayant deux branches (6), où au moins l'une des branches (6) présente le trou oblong (4) au moins au nombre de un.

6. Composant de châssis selon la revendication 5, **caractérisé en ce que** la languette (8) est retournée au niveau de l'extrémité frontale de la branche (6) présentant le trou oblong (4) au moins au nombre de un.

7. Composant de châssis selon la revendication 5 ou 6,
**caractérisé en ce que** la languette retournée (8) et la branche (6) présentant la languette (8) délimitent un interstice (26) dont la largeur se situe dans la plage allant de 0,1 mm à 10 mm, de préférence dans la plage allant de 0,5 mm à 1 mm.

8. Composant de châssis selon l'une quelconque des revendications 1 à 7, **caractérisé en ce que** l'évidement (10) délimite, dans la languette (8), une barrette (22) de la languette (8), ladite barrette étant en forme d'étrier, où la barrette (22) présente une largeur (B) qui est au moins égale au double, de préférence au moins égale au triple de l'épaisseur (D) de la languette (8).

9. Composant de châssis selon la revendication 8,
**caractérisé en ce qu'**une plus petite largeur (B) de la barrette (22) est inférieure à 15 fois, de préférence inférieure à 10 fois l'épaisseur (D) de la languette (8).

10. Composant de châssis selon la revendication 5, ou bien selon la revendication 5 en combinaison avec l'une quelconque des revendications 6 à 9,
**caractérisé en ce que** la hauteur (H_{L}) de la languette (8) est inférieure à la hauteur (H_{S}) de la branche (6) présentant la languette (8).

11. Procédé de fabrication d'un composant de châssis (2, 2'),
procédé au cours duquel une tôle métallique, de préférence une tôle d'acier, est découpée pour former un larget présentant une languette (8),
procédé au cours duquel un évidement (10) destiné à recevoir un disque de l'excentrique (18) est découpé dans la tôle métallique, ladite découpe se produisant avant, pendant ou après la découpe du larget, lequel disque de l'excentrique est assemblé en étant solidaire en rotation ou bien pouvant être assemblé en étant solidaire en rotation avec un boulon d'assemblage (20), et un trou oblong (4) destiné à recevoir le boulon d'assemblage (20) est découpé à côté de l'évidement (10),
procédé au cours duquel l'évidement (10) est disposé dans la languette (8) ou dans la zone de la languette (8) à découper et est délimité par deux surfaces de butée allongées (16) s'étendant parallèlement l'une à l'autre,
procédé au cours duquel le larget est transformé en un composant en forme de goulotte, ledit composant présentant deux branches (6), de sorte que la languette (8) est disposée, côté frontal, au niveau de l'une des branches (6) du composant, et
procédé au cours duquel, après la découpe de l'évidement (10) et après le moulage du composant en forme de goulotte, la languette est retournée de manière telle, que son évidement (10) entoure le trou oblong (4), et le disque de l'excentrique (18) peut être disposé dans l'évidement (10), où les surfaces de butée (16) servent de butée pour le disque de l'excentrique (18) assemblé en étant solidaire en rotation avec le boulon d'assemblage (20).

12. Procédé selon la revendication 11, au cours duquel la languette (8), par rapport à la branche (6) sur laquelle est disposée la languette (8), est retournée en formant un angle de retournement se situant dans la plage allant de 175° à 185°, de préférence en formant un angle de retournement pratiquement de 180°.

13. Procédé selon la revendication 11 ou 12, au cours duquel le trou oblong (4) est découpé dans la tôle métallique avant de procéder au retournement de la languette (8).

14. Procédé selon l'une quelconque des revendications 11 à 13, au cours duquel le trou oblong (4) et l'évidement (10) sont découpés en même temps dans la tôle métallique.

15. Procédé selon l'une quelconque des revendications 11 à 14, au cours duquel le trou oblong (4) et/ou l'évidement (10) sont découpés dans la tôle métallique avant le moulage du composant en forme de goulotte.
